# EUROPEAN PATENT APPLICATION

(11) **EP 4 462 536 A1**
(43) Date of publication of application: **13.11.2024**
(21) Application number: 22917744.9
(22) Date of filing: 05.01.2022
(51) Int. Cl.: H01M 10/0525

(54) **BATTERY AND ELECTRICAL DEVICE**

(71) Applicant: Ningde Amperex Technology Limited, Ningde, Fujian 352100 (CN)
(72) Inventor: YANG, Hongzhan, Ningde, Fujian 352100 (CN)
(74) Representative: Klunker IP Patentanwälte PartG mbB
(86) International application number: PCT/CN2022/070357
(87) International publication number: WO 2023/130268

(57) **Abstract**

Embodiments of this disclosure are intended to provide a battery and an electric apparatus. The battery includes a multilayer body, a first conductive portion, a second layer, and a housing. The multilayer body includes a first conductive layer, a second conductive layer, and a first layer positioned between the first conductive layer and the second conductive layer, the first layer including an insulating material. The first conductive portion is electrically connected to the first conductive layer, and the first conductive portion extends in a first direction away from the multilayer body. The housing encompasses the multilayer body, and the housing encompasses a portion of the first conductive portion and a portion of the second layer. When viewed along a third direction perpendicular to both the first direction and the second direction, the second layer includes a first region that overlaps with the first conductive portion and a second region apart from the first conductive portion, where in the first direction, the second region has a first recess recessed toward the housing.

## Description

### TECHNICAL FIELD

This disclosure relates to the field of electrochemical devices, and in particular to a battery and an electric apparatus.

### BACKGROUND

Due to high energy density, long cycle life, and extended storage time, secondary batteries such as lithium-ion batteries are widely used in electric vehicles, smart storage devices, unmanned aerial vehicles, and other electric devices.

In the related art, to reduce the volume of the battery, the tabs are bent toward the battery housing. However, after bending, the tabs are prone to phenomena such as rebound, affecting reliability of the battery.

### SUMMARY

Embodiments of this disclosure are intended to provide a battery and an electric apparatus where a tab structure is improved to reduce bending stress at the root of the tabs, thereby improving the reliability of the battery.

According to some embodiments of a first aspect of this disclosure, a battery is provided. The battery includes a multilayer body, a first conductive portion, a second layer, and a housing, where the multilayer body includes a first conductive layer, a second conductive layer, and a first layer positioned between the first conductive layer and the second conductive layer, the first layer including an insulating material; the first conductive portion is electrically connected to the first conductive layer, and the first conductive portion extends in a first direction away from the multilayer body; the housing encompasses the multilayer body, and the housing encompasses a portion of the first conductive portion and a portion of the second layer, where when viewed along a third direction perpendicular to both the first direction and the second direction, the second layer includes a first region that overlaps with the first conductive portion and a second region apart from the first conductive portion, where in the first direction, the second region has a first recess recessed toward the housing.

In the battery provided in some embodiments of this disclosure, the battery includes the first conductive portion connected to the multilayer body and the second layer that encompasses a portion of the first conductive portion. The second layer includes the first region overlapped with the first conductive portion, and the second region located on the side of the first region in the second direction. The second region has the first recess on a side away from the housing. Because the second region is provided with the first recess, when the first conductive portion is bent, the first recess disperses the bending stress at the root of the first conductive portion, thus reducing the bending stress at the root of the first conductive portion, leading to a lower degree and probability of rebound of the first conductive portion. In addition, when the first conductive portion is connected to a circuit board, this can improve the connection stability between the first conductive portion and the circuit board, enhancing the reliability of the battery.

The battery according to some embodiments of this disclosure may further include the following additional technical characteristics:

In some embodiments of this disclosure, in the second direction, the second layer includes a first endpoint, a second endpoint, and a third endpoint. The first endpoint is located in the first region, and the first endpoint is apart from the housing in the first direction; the second endpoint is located in the second region, and the second endpoint is apart from the housing in the first direction and is farthest from the housing in the first direction; and the third endpoint is located in the second region, and the third endpoint is apart from the housing in the first direction and is closest to the housing in the first direction, where the first endpoint is located at a boundary between the first region and the second region, and in the second direction, the third endpoint is located between the first endpoint and the second endpoint.

In some embodiments of this disclosure, with the first endpoint, the third endpoint, and the second endpoint sequentially connected, the first recess is formed on a plane they reside. The first recess disperses the bending stress at the root of the first conductive portion, thus reducing the bending stress at the root of the first conductive portion, leading to a lower degree and probability of rebound of the first conductive portion. In addition, when the first conductive portion is connected to the circuit board, this can improve the connection stability between the first conductive portion and the circuit board, enhancing the reliability of the battery.

In some embodiments of this disclosure, in the first direction, a first distance from the housing to the first endpoint is shorter than a second distance from the housing to the second endpoint. The first endpoint is located in the first region, and the first region is a portion of the second layer. The second layer is used for melting to heat seal the battery, and is typically a tab adhesive resin layer. This helps to decrease area of the first region, thereby reducing the probability of increased bending difficulty of the first conductive portion due to a large area of the first region.

In some embodiments of this disclosure, the first distance is D1, and the second distance is D2, where D2 > D1 > 1/3D2. The first distance D1 is shorter than D2, meaning that a height of the second region along the first direction is longer than a height of the side of the second region connecting the first region. This contributes to reducing the bending stress on the root of the first conductive portion, leading to lower degree and probability of rebound of the first conductive portion. In addition, when the first conductive portion is connected to the circuit board, this can improve the connection stability between the first conductive portion and the circuit board, enhancing the reliability of the battery. The first distance D1 being longer than 1/3D2 reduces the probability of poor packaging melting of the second layer and the battery housing due to an excessively short first distance.

In some embodiments of this disclosure, the first distance ranges from 0.1 mm to 2.5 mm, and the second distance ranges from 0.2 mm to 3.0 mm.

In some embodiments of this disclosure, when viewed along the third direction, the first recess includes a first end edge connecting the first endpoint and the third endpoint in the second region and a second end edge connecting the second endpoint and the third endpoint, where the third direction is perpendicular to both the first direction and the second direction. Outer surfaces where the first end edge and the second end edge reside jointly create the first recess, thus reducing the bending stress at the root of first conductive portion, leading to lower degree and probability of rebound of the first conductive portion. In addition, when the first conductive portion is connected to the circuit board, this can improve the connection stability between the first conductive portion and the circuit board, enhancing the reliability of the battery.

The first end edge and the second end edge both can be in linear, curved, or irregular shapes, and this is not limited in this disclosure.

In some embodiments of this disclosure, in the first direction, the first end edge includes a first protrusion protruding away from the housing. The provision of the first protrusion improves the airtightness and heat dissipation performance between the first conductive portion, the second layer, and the housing.

In some embodiments of this disclosure, in the first direction, the first end edge includes a second recess recessed toward the housing. The provision of the second recess facilitates selection of the bending position of the first conductive portion, allowing flexible bending between the second endpoint B and the third endpoint C, while reducing the risk of involvement of the second end edge during bending at the third endpoint C.

In some embodiments of this disclosure, the first end edge is a straight line. This helps maintain strength of the first end edge of the second layer.

In some embodiments of this disclosure, in the first direction, the second end edge includes a second protrusion protruding away from the housing. The provision of the second protrusion increases a surface area of the second layer, facilitating heat dissipation of the second layer.

In some embodiments of this disclosure, in the first direction, the second end edge includes a third recess recessed toward the housing. The provision of the third recess facilitates the bending of the second layer at the second end edge, thereby improving energy density.

In some embodiments of this disclosure, the second end edge is a straight line. This helps maintain strength of the second end edge of the second layer.

In some embodiments of this disclosure, the second layer includes a fourth endpoint farthest from the first conductive portion in the second direction and in contact with the housing. The fourth endpoint, jointly with the first endpoint, the second endpoint, and the third endpoint, defines the outer shape of the second region.

In some embodiments of this disclosure, in the second direction, a third distance from the first endpoint to the third endpoint is longer than a fourth distance from the second endpoint to the fourth endpoint. The third distance being longer than the fourth distance facilitates the processing of the first recess, and also facilitates the packaging of the battery in the second region, thereby improving the packaging reliability.

In some embodiments of this disclosure, the first distance is D1, the second distance is D2, the third distance is D3, and the fourth distance is D4, where D3 + D4 < D1 < D2. When D3 + D4 < D 1, it ensures sufficient exposed length in the first direction for packaging efficiency and packaging strength, while achieving a moderate bending effect at the root, thus improving energy density. When D1 < D2, it reduces the risk of poor packaging due to the first conductive portion shaking and misalignment during the packaging process between the first conductive portion and the housing.

In some embodiments of this disclosure, the third distance ranges from 0.1 mm to 2 mm, and the fourth distance ranges from 0.1 mm to 2 mm.

In some embodiments of this disclosure, in the second direction, the second endpoint is located between the fourth endpoint and the third endpoint. In this way, the fourth endpoint is far from the first region, contributing to a sufficient sealing range for the second layer to be hot-pressed to seal the housing, thereby improving the sealing reliability.

In some embodiments of this disclosure, when viewed along the third direction, the battery includes a third end edge connecting the second endpoint and the fourth endpoint. The first end edge, the second end edge, and the third end edge jointly define the outer shape of the second region.

In some embodiments of this disclosure, in the first direction, the third end edge has a third protrusion protruding away from the housing. The provision of the third protrusion increases a surface area of the second layer, facilitating heat dissipation of the second layer.

In some embodiments of this disclosure, in the first direction, the third end edge has a fourth recess recessed toward the housing. The provision of the fourth recess facilitates the bending of the second layer at the third end edge, thereby improving energy density.

In some embodiments of this disclosure, the third end edge is a straight line. This helps maintain strength of the third end edge of the second layer.

In some embodiments of this disclosure, the multilayer body is of an axially wound structure or a stacked structure.

According to some embodiments of a second aspect of this disclosure, an electric apparatus is provided. The electric apparatus includes the battery according to the first aspect, where the battery is configured to supply electric energy to the electric apparatus.

The electric apparatus provided in some embodiments of this disclosure utilizes the battery according to the first aspect as a power source. The battery includes the first conductive portion connected to the multilayer body and the second layer that encompasses a portion of the first conductive portion. The second layer includes the first region overlapped with the first conductive portion, and the second region located on the side of the first region in the second direction. The second region has the first recess on a side away from the housing. Because the second region is provided with the first recess, when the first conductive portion is bent, the first recess disperses the bending stress at the root of the first conductive portion, thus reducing the bending stress at the root of the first conductive portion, leading to a lower degree and probability of rebound of the first conductive portion. In addition, when the first conductive portion is connected to a circuit board, this can improve the connection stability between the first conductive portion and the circuit board, enhancing the reliability of the battery and the electric apparatus.

### BRIEF DESCRIPTION OF DRAWINGS

To describe the technical solutions in the embodiments of this disclosure and in the prior art more clearly, the following briefly describes the accompanying drawings required for describing the embodiments and the prior art. Apparently, the accompanying drawings in the following description show merely some embodiments of this disclosure, and persons of ordinary skill in the art may derive other embodiments from these accompanying drawings without creative efforts.
FIG 1 is a schematic structural diagram of a battery in a third direction according to an embodiment of this disclosure;
FIG 2 is a schematic structural diagram of a battery in a second direction according to an embodiment of this disclosure;
FIG 3 is a schematic exploded view of a battery according to an embodiment of this disclosure;
FIG 4 is a top view of a tab in a first direction according to an embodiment of this disclosure;
FIG 5 is an enlarged view of position M in FIG. 1;
FIG 6 is a schematic structural diagram of a second layer according to an embodiment of this disclosure;
FIG 6A is a schematic structural diagram of a second layer according to an embodiment of this disclosure;
FIG 6B is a schematic structural diagram of another second layer according to an embodiment of this disclosure;
FIG 7 is a schematic structural diagram of another second layer according to an embodiment of this disclosure;
FIG 7A is a schematic structural diagram of another second layer according to an embodiment of this disclosure;
FIG 7B is a schematic structural diagram of another second layer according to an embodiment of this disclosure;
FIG 8 is a schematic structural diagram of another second layer according to an embodiment of this disclosure;
FIG 8A is a schematic structural diagram of another second layer according to an embodiment of this disclosure;
FIG 8B is a schematic structural diagram of another second layer according to an embodiment of this disclosure;
FIG 9 is a schematic structural diagram of a multilayer body according to an embodiment of this disclosure; and
FIG 10 is a schematic structural diagram of another multilayer body according to an embodiment of this disclosure.

### Reference signs:

battery-10; housing-20; circuit board-110; multilayer body-200; first conductive layer-201; second conductive layer-202; first layer-203; first conductive portion-300; second layer-400; first region-500; second region-600; first recess-610; first endpoint-A; second endpoint-B; third endpoint-C; fourth endpoint-D; first end edge-611; second end edge-612; third end edge-613; first protrusion-614; second recess-615; second protrusion-616; third recess-617; third protrusion-618; fourth recess-619; first distance-D1; second distance-D2; third distance-D3; fourth distance-D4; fifth distance-D5; sixth distance-D6; seventh distance-D7; eighth distance-D8; first side-301; second side-302; third side-303; and fourth side-304.

### DETAILED DESCRIPTION

The following clearly and detailedly describes the technical solutions in the embodiments of this disclosure. Apparently, the described embodiments are only some rather than all of the embodiments of this disclosure. Unless otherwise defined, all technical and scientific terms used herein shall have the same meanings as commonly understood by persons skilled in the art to which this disclosure pertains. The terms used in the specification of this disclosure are merely intended to describe specific embodiments but not intended to constitute any limitation on this disclosure.

The following describes some embodiments of this disclosure in detail. However, this disclosure may be embodied in many different implementations and should not be construed as being limited to the example embodiments set forth herein. Rather, these example embodiments are provided so that this disclosure can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected the element B or an intervening element C may be present therebetween such that the element A and the element B are indirectly connected to each other.

Further, the use of "may" when describing embodiments of this disclosure relates to "one or more embodiments of this disclosure."

The terminology used herein is merely intended to describe specific embodiments but not intended to constitute any limitation on this disclosure. As used herein, the singular forms are intended to include the plural forms as well, unless the context clearly indicates otherwise. It should be further understood that the terms "comprise" or "include" and variations thereof, when used in this specification, specify the presence of stated features, numbers, steps, operations, elements, and/or components but do not preclude the presence or addition of one or more other features, numbers, steps, operations, elements, components, and/or groups thereof.

Space related terms such as "above" may be used herein for ease of description to describe the relationship between one element or feature and another element (a plurality of elements) or feature (a plurality of features) as illustrated in the figure. It should be understood that the space related terms are intended to encompass different orientations of a device or means in use or operation in addition to the orientations depicted in the figures. For example, if the device in the figures is turned over, elements described as "above" or "over" other elements or features would then be oriented "below" or "beneath" the other elements or features. Thus, the example term "above" can encompass both orientations of being above and below. It should be understood that although the terms first, second, third, or so on may be used herein to describe various elements, components, zones, layers, and/or portions, these elements, components, zones, layers, and/or portions should not be limited by these terms. These terms are used to distinguish one element, component, region, layer, or portion from another element, component, region, layer, or portion. Therefore, the first element, component, region, layer, or portion discussed below may be referred to as a second element, component, region, layer, or portion without departing from the teachings of the example embodiments. In this disclosure, the first direction may be any direction in a plane in which the first surface is located.

Some embodiments of this disclosure are described in detail below. In absence of conflicts, the following embodiments and features in the embodiments may be combined.

Due to high energy density, long cycle life, and extended storage time, secondary batteries such as lithium-ion batteries are widely used in electric vehicles, smart storage devices, unmanned aerial vehicles, and other electric apparatuses.

In the related art, a lithium-ion battery may include two tabs, a housing, and an electrode assembly located inside the housing. The two tabs are led out from the electrode assembly and extend outside the housing through a tab adhesive. The tab adhesive is used for sealing between the tab and the battery housing. To reduce the space of the battery occupied in the direction where the tabs extend, the tabs may be bent. However, when excessive tab adhesive is applied, the tabs may rebound after bending, affecting reliability of the battery.

In view of the foregoing problems, some embodiments of this disclosure provide a battery 10 and an electric apparatus where a tab structure is improved to reduce bending stress at the root of the tabs, thereby improving the reliability of the battery 10.

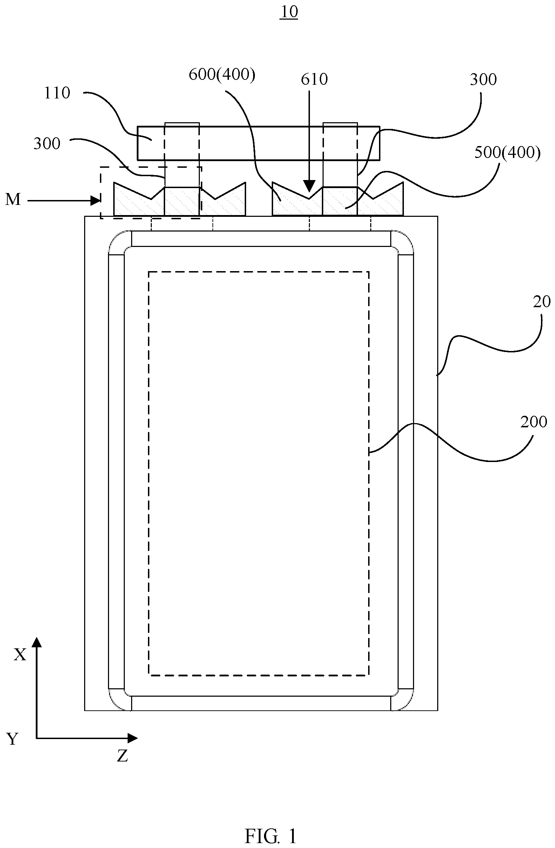

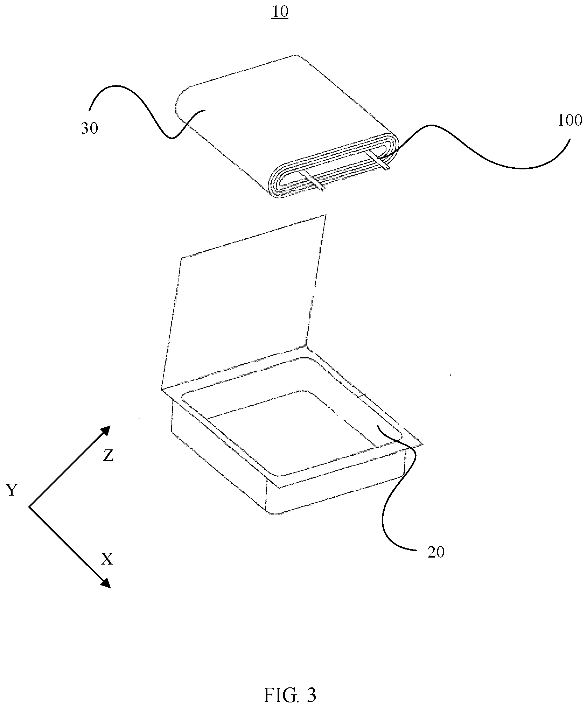

As shown in FIG 1, FIG 2, FIG. 3, FIG 5, and FIG 9, some embodiments of a first aspect of this disclosure provide a battery 10. The battery 10 includes a multilayer body 200, a first conductive portion 300, a second layer 400, and a housing 20. The multilayer body 200 includes a first conductive layer 201, a second conductive layer 202, and a first layer 203 disposed between the first conductive layer 201 and the second conductive layer 202, the first layer 203 including an insulating material. The first conductive portion 300 is electrically connected to the first conductive layer 201 and extends in a first direction away from the multilayer body 200. The housing 20 encompasses the multilayer body 200 and encompasses a portion of the first conductive portion 300 and a portion of the second layer 400. When viewed along a third direction perpendicular to both the first direction and the second direction, the second layer 400 includes a first region 500 that overlaps with the first conductive portion 300 and a second region 600 that is apart from the first conductive portion 300. In the first direction, the second region 600 has a first recess 610 recessed toward the housing 20.

In some embodiments of this disclosure, the first direction refers to a direction in which the second layer 400 extends from the housing 20, the second direction refers to an extension direction from the first region 500 to the second region 600 of the second layer 400, and the third direction is perpendicular to both the second direction and the first direction. Specifically, as shown in FIG. 1, some embodiments are described in detail below by using an example of the first direction being the X direction, the second direction being the Z direction, and the third direction being the Y direction.

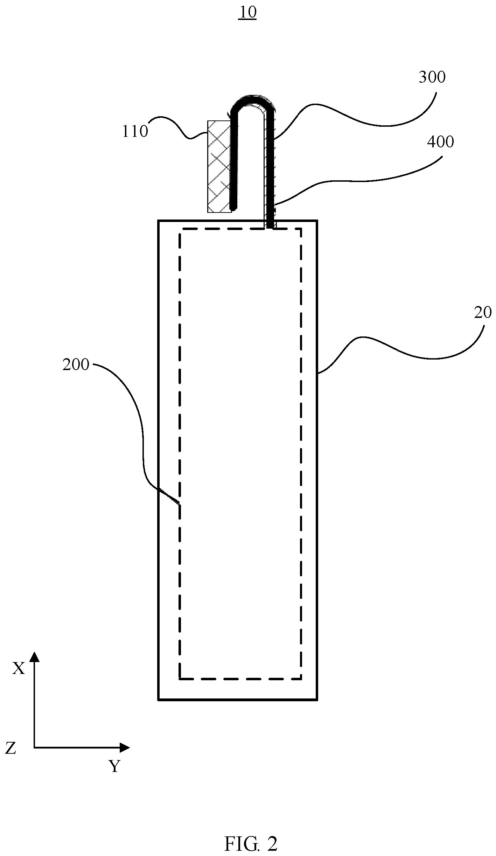

FIG 1 shows a battery 10 in an embodiment of this disclosure. The battery 10 includes a housing 20 and a multilayer body 200 located inside the housing 20. The battery 10 may further include a first conductive portion 300, and the first conductive portion 300 is electrically connected to the multilayer body 200 inside the housing 20 and extends out of the housing 20 from the multilayer body 200. The first conductive portion 300 may be a tab, and specifically, the first conductive portion 300 may be a positive electrode tab or a negative electrode tab. Material of the first conductive portion 300 is typically aluminum, copper, or alloy materials. Further, as shown in FIG 1 and FIG. 2, the battery 10 may further include a circuit board 110, where the circuit board 110 is connected to the first conductive portion 300 extending out of the housing 20. The circuit board 110 is an integrated circuit board configured to protect the battery 10, specifically to reduce probability of overcharging, over-discharging, or circuit breakage of the battery. Optionally, as shown in FIG 1, in order to reduce space of the battery 10 occupied in the direction where the first conductive portion 300 extends, when the first conductive portion 300 is connected to the circuit board 110, the first conductive portion 300 is bent. Optionally, the connection between the first conductive portion 300 and the circuit board 110 may include, but is not limited to, adhesive bonding, welding, and the like.

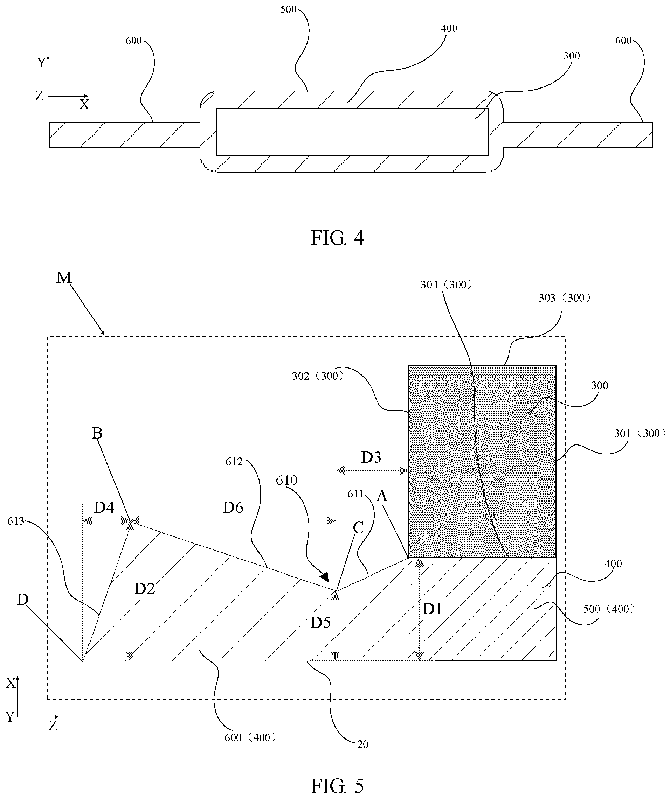

As shown in FIG. 1 and FIG 4, FIG 4 is a top view of the first conductive portion 300 in the first direction X. The second layer 400 encompasses a portion of the first conductive portion 300, and the second layer 400 can be a tab adhesive resin layer. Material of the tab adhesive resin layer may include polypropylene, modified polypropylene, or polyolefin resin materials such as polyethylene. Further, the tab adhesive resin layer may have a multilayer resin layer or polyester layer structure. For example, an outermost layer of the tab adhesive resin layer may be a resin layer for heat sealing, which is melted and compressed with an inner resin layer of an outer packaging film of the housing 20 to achieve the sealing between the housing of the battery 10 and the first conductive portion 300.

In some embodiments of this disclosure, the second layer 400 is located on a portion of an outer surface of the first conductive portion 300. As shown in FIG. 4, when viewed along the first direction X, the second layer 400 overlaps with the inner first conductive portion 300 at the first region 500. In addition, the second layer 400 further includes a second region 600 that is apart from the first conductive portion 300, and extends in the second direction, and is opposite to the first region 500. The second layer 400 can be used to be melt and compressed with the inner resin layer of the housing 20 of the battery 10, thereby achieving the sealing between the battery 10 and the first conductive portion 300.

The multilayer body 200 in the battery 10 may be an electrode assembly, where the electrode assembly is a component where electrochemical reactions take place to generate electric energy in the battery 10. The multilayer body 200 can be formed by axially winding or stacking the first conductive layer 201 and the second conductive layer 202. The first conductive layer 201 and the second conductive layer 202 can each be a positive or negative electrode plate in the electrode assembly, and the first conductive layer 201 and the second conductive layer 202 have opposite polarities. Further, the first conductive layer 201 and the second conductive layer 202 can include active material portions that jointly form a body portion of the multilayer body 200. Optionally, when the first conductive layer 201 or the second conductive layer 202 is a positive electrode plate, the active material can be LiCoO₂, and when the first conductive layer 201 or the second conductive layer 202 is a negative electrode plate, the active material can be carbon or the like. In addition, the first conductive portion 300 is connected to the first conductive layer 201. Specifically, the first conductive portion 300 can be a positive or negative electrode tab connected to the positive or negative electrode plate. Further, when the first conductive portion 300 is a positive electrode tab, material of the first conductive portion 300 can be at least one of aluminum (Al) or an aluminum alloy, and when the first conductive portion 300 is a negative electrode tab, the material of the first conductive portion 300 can be at least one of nickel (Ni), copper (Cu), or nickel-plated copper (Ni-Cu).

In addition, the multilayer body 200 can include a first layer 203 located between the first conductive layer 201 and the second conductive layer 202. The first layer 203 may be a separator, where the separator is a porous plastic film commonly made of a material such as polypropylene (PP), polyethylene (PE), copolymers of propylene and ethylene, or homopolymers of polyethylene. When the multilayer body 200 includes the first layer 203, the first conductive layer 201, the second conductive layer 202, and the first layer 203 can be arranged by winding or stacking to form the multilayer body 200.

The battery 10 provided in some embodiments of this disclosure includes the first conductive portion 300 connected to the multilayer body 200 and the second layer 400 that encompasses a portion of the first conductive portion 300. The second layer 400 includes the first region 500 overlapped with the first conductive portion 300, and the second region 600 located on the side of the first region 500 in the second direction Z. The second region 600 has the first recess 610 on a side away from the housing 20. Because the second region 600 is provided with the first recess 610, when the first conductive portion 300 is bent, the first recess 610 disperses the bending stress at the root of the first conductive portion 300, thus reducing the bending stress at the root of the first conductive portion 300, leading to lower degree and probability of rebound of the first conductive portion 300. In addition, when the first conductive portion 300 is connected to the circuit board 110, this can improve the connection stability between the first conductive portion 300 and the circuit board 110, enhancing the reliability of the battery 10.

As shown in FIG 1 and FIG 5, in some embodiments of this disclosure, when viewed along the third direction Y, the second layer 400 includes the first region 500 and the second region 600. The second region 600 includes the first end edge 611, the second end edge 612, and the third end edge 613. The first recess 610 is jointly defined by surfaces where the first end edge 611 and the second end edge 612 reside. The first recess 610 disperses the bending stress at the root of the first conductive portion 300, thus reducing the bending stress at the root of the first conductive portion 300, leading to a lower degree and probability of rebound of the first conductive portion 300. In addition, when the first conductive portion 300 is connected to the circuit board 110, this can improve the connection stability between the first conductive portion 300 and the circuit board 110, enhancing the reliability of the battery 10.

As shown in FIG 5, in some embodiments of this disclosure, in the second direction Z, the second region 600 includes a first endpoint A, a second endpoint B, a third endpoint C, and a fourth endpoint D. The first endpoint A and the third endpoint C are located on the first end edge 611, the second endpoint B and the third endpoint C are located on the second end edge 612, and the second endpoint B and the fourth endpoint D are located on the third end edge 613.

Further, as shown in FIG 5, in the second direction, the first conductive portion 300 includes a first side 301 farthest from the second region 600 and a second side 302 close to the second region 600. In the first direction, the first conductive portion 300 includes a third side 303 farthest from the first region 500 and a fourth side 304 overlapped with the first region 500.

When viewed along the third direction Y, the first endpoint A is located in the first region 500, and the first endpoint A is apart from the housing 20 in the first direction X, and the first endpoint A is the intersection of the first end edge 611 and the second side 302 of the first conductive portion 300. The second endpoint B is located in the second region 600 and is apart from the housing 20 in the first direction X and is closest to the housing 20 in the first direction X, and the second endpoint B is the intersection of the second end edge 612 and the third end edge 613. The third endpoint C is located in the second region 600 and is apart from the housing 20 in the first direction X and is closest to the housing 20 in the first direction X, and the third endpoint C is the intersection of the first end edge 611 and the second end edge 612. The fourth endpoint D is located at a boundary between the second region and the housing 20, and in the second direction Z, the fourth endpoint is farthest from the first conductive portion 300. In the second direction Z, the third endpoint C is located between the first endpoint A and the second endpoint B. When viewed along the third direction Y, with the first endpoint A, the third endpoint C, and the second endpoint B sequentially connected, the first recess 610 can be created by the planes they reside.

In some embodiments of this disclosure, in the first direction X, a first distance from the housing 20 to the first endpoint A is shorter than a second distance from the housing 20 to the second endpoint B. The first endpoint A is located in the first region 500. The first region 500 is generally a portion of the second layer 400, and the second layer is used for heat sealing the battery 10. The second layer 400 is generally a tab adhesive resin layer. This helps to decrease area of the first region 500, thereby reducing the probability of increased bending difficulty of the first conductive portion 300 due to a large area of the first region 500.

In some embodiments of this disclosure, in the second direction Z, a third distance from the first endpoint A to the third endpoint C is longer than a fourth distance from the second endpoint B to the fourth endpoint D.

The third distance being longer than the fourth distance facilitates the processing of the first recess 610, and also facilitates the packaging of the battery in the second region 600, thereby improving the packaging reliability.

As shown in FIG 5, in some embodiments of this disclosure, the first distance is D1, and the second distance is D2, where D2 > D1 > 1/3D2.

The first distance D1 refers to a distance from the first endpoint A to the housing 20 in the first direction X. The second distance D2 refers to a distance from the second endpoint B to the housing 20 in the first direction X. As shown in FIG 5, there is further a fifth distance D5. The fifth distance D5 refers to a distance from the third endpoint C to the housing 20 in the first direction X. In the first direction X, the fifth distance D5 is shorter than both the first distance D1 and the second distance D2, thereby forming a recess shape for the first recess 610.

The first distance D1 is shorter than D2 but longer than 1/3D2, allowing a height of the second region 600 along the first direction X to be longer than a height of the side of the second region 600 connecting the first region 500. This contributes to reducing the bending stress on the root of the first conductive portion 300, leading to lower degree and probability of rebound of the first conductive portion 300. In addition, when the first conductive portion 300 is connected to the circuit board, this can improve the connection stability between the first conductive portion 300 and the circuit board 110, enhancing the reliability of the battery 10. In addition, the first distance D1 being longer than 1/3D2 reduces the probability of poor packaging melting of the second layer 400 and the battery 10 due to an excessively short first distance D1.

Specifically, as shown in Table 1, test results are given in regard to some specific examples and comparative examples testing the packaging reliability set forth according to some embodiments of this disclosure.

**Table 1: Influence of the relationship between D1 and D2 on packaging reliability**

| Test item | Example 1 | Comparative example 1 | Comparative example 2 |
|---|---|---|---|
| Condition | D1 > 1/3D2 | D1 = 1/3D2 | D1 < 1/3D2 |
| Pass rate | 20/20 | 18/20 | 13/20 |

In Table 1, the test condition is as follows: packaging tension at the tabs are checked for example 1, comparative example 1, and comparative example 2. If the packaging tension is < 2 N/mm, it is considered as poor packaging, and the test result is considered as not passing. From a comparison drawn, it can be concluded that the first distance being longer than 1/3D2 reduces the probability of poor packaging melting of the second layer 400 and the battery 10 due to an excessively short first distance D1.

In some embodiments of this disclosure, the first distance D1 ranges from 0.1 mm to 2.5 mm, and the second distance D2 ranges from 0.2 mm to 3.0 mm.

In some embodiments of this disclosure, the first distance is D1, the second distance is D2, the third distance is D3, and the fourth distance is D4, where D3 + D4 < D1 < D2.

As shown in FIG 5, the second region 600 further includes the third distance D3 and the fourth distance D4. The third distance D3 refers to a distance from the third endpoint C to the first endpoint A in the second direction Z, and the fourth distance D4 refers to a distance from the fourth endpoint D to the second endpoint B in the second direction Z. The second region 600 further includes a sixth distance D6, where the sixth distance D6 refers to a distance from the third endpoint C to the second endpoint B in the second direction Z. In the second direction Z, the sixth distance D6 is longer than both the third distance D3 and the fourth distance D4.

When D3 + D4 < D1, it ensures sufficient exposed length in the first direction X for packaging efficiency and packaging strength, while achieving a moderate bending effect at the root, thus improving energy density. When D1 < D2, it reduces the risk of poor packaging due to the first conductive portion 300 shaking and misalignment in the X-Z plane during the packaging process between the first conductive portion 300 and the housing 20.

In some embodiments of this disclosure, the third distance D3 ranges from 0.1 mm to 2 mm, and the fourth distance D4 ranges from 0.1 mm to 2 mm.

As shown in FIG 5, in some embodiments of this disclosure, in the second direction Z, the second endpoint B is located between the fourth endpoint D and the third endpoint C. In this way, when viewed along the third direction Y, in the second layer 400, the fourth endpoint D in the second direction Z is farthest from the first region 500. This contributes to a sufficient sealing range for the second layer 400 or the tab adhesive resin layer, to be hot-pressed to seal the housing 20, thereby improving the sealing reliability.

Planes where the first end edge 611, the second end edge 612, and the third end edge 613 reside jointly define the outer shape of the second region 600. The first end edge 611, the second end edge 612, and the third end edge 613 can be in linear, curved, or irregular shapes, and this is not limited in this disclosure.

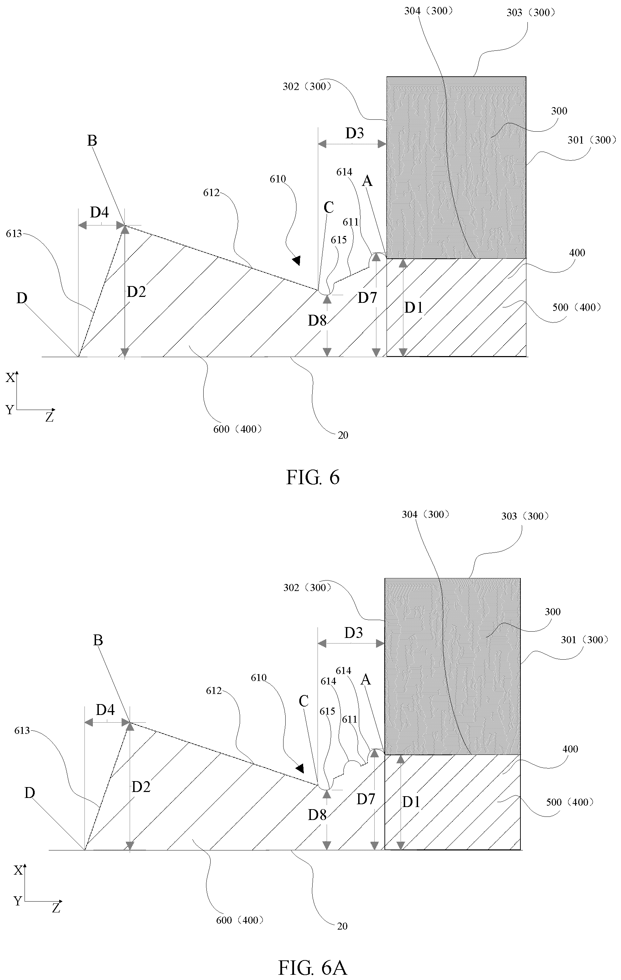

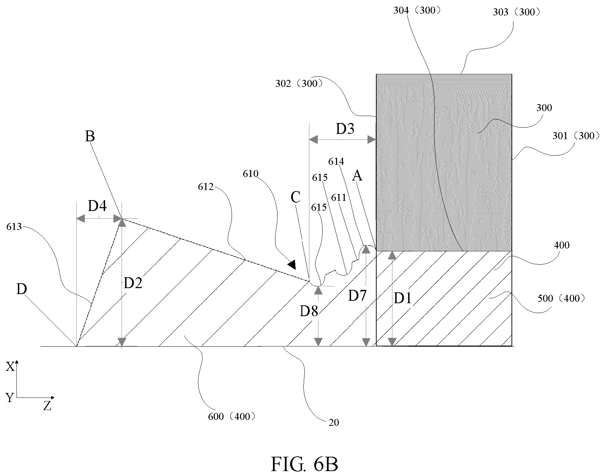

Specifically, as shown in FIG 6, in some embodiments of this disclosure, in the first direction X, the first end edge 611 includes a first protrusion 614 that protrudes away from the housing 20 and a second recess 615 that recesses toward the housing 20. In the first direction X, the topmost portion of the first protrusion 614 has a seventh distance D7 from the housing 20, where D7 > D1. This helps increase the contact area between the second layer 400 and the housing 20. The bottommost portion of the second recess 615 has an eighth distance D8 from the housing 20, where D8 < D1. This further facilitates the reduction of stress concentration at the root of the first conductive portion 300 during bending, leading to a lower degree and probability of rebound of the first conductive portion 300.

The provision of the first protrusion 614 improves the airtightness and heat dissipation performance between the first conductive portion 300, the second layer 400, and the housing 20. The provision of the second recess 615 facilitates selection of the bending position of the first conductive portion 300, allowing flexible bending between the second endpoint B and the third endpoint C, while reducing the risk of involvement of the second end edge 612 during bending at the third endpoint C.

Alternatively, as shown in FIG 6A, the first end edge 611 has a first protrusion 614 and a second recess 615 respectively at two ends, and another first protrusion 614 at the middle of the first end edge 611.

Alternatively, as shown in FIG 6B, the first end edge 611 has a first protrusion 614 and a second recess 615 respectively at two ends, and another second recess 615 at the middle of the first end edge 611.

Alternatively, the first end edge 611 has only one first protrusion 614 or one second recess 615.

It can be readily envisioned that the number of first protrusions 614 and the number of second recesses 615 on the first end edge 611 can be freely combined without limitation in this disclosure.

Alternatively, as shown in FIG 5, the first end edge 611 is a straight line. This helps maintain strength of the first end edge 611 of the second layer 400. Correspondingly, the second end edge 612 can also have various shapes.

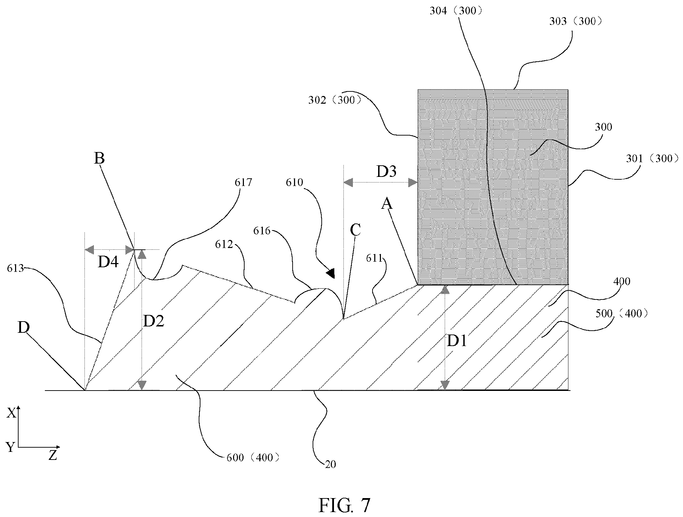

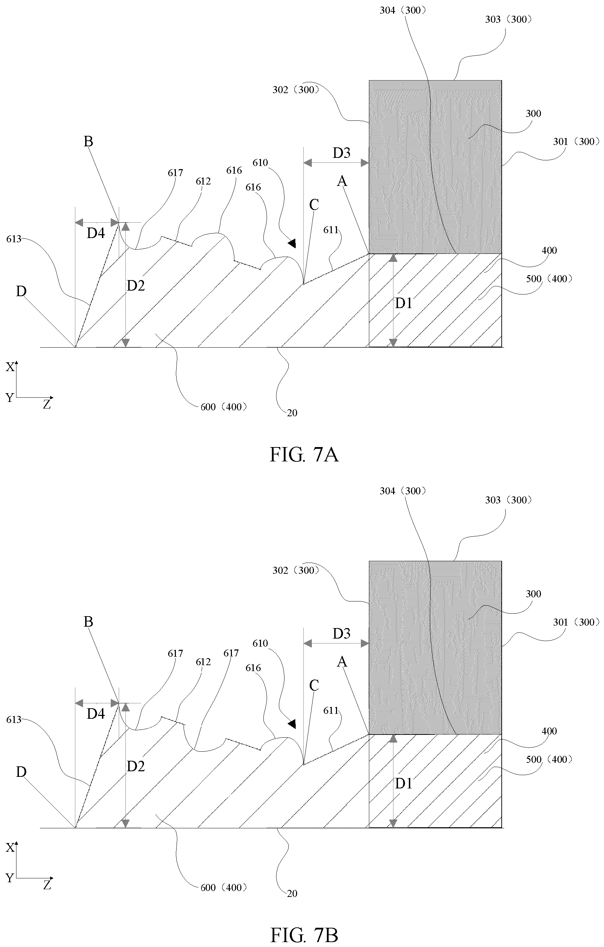

As shown in FIG 7, in some embodiments of this disclosure, in the first direction X, the second end edge 612 includes a second protrusion 616 that protrudes away from the housing 20 and a third recess 617 that recesses toward the housing 20.

The provision of the second protrusion 616 increases a surface area of the second layer 400, facilitating heat dissipation of the second layer 400. The provision of the third recess 617 facilitates the bending of the second layer 400 at the second end edge 612, thereby improving energy density.

Alternatively, as shown in FIG 7A, the second end edge 612 has a second protrusion 616 and a third recess 617 respectively at two ends, and another second protrusion 616 at the middle of the second end edge 612.

Alternatively, as shown in FIG 7B, the second end edge 612 has a second protrusion 616 and a third recess 617 respectively at two ends, and another third recess 617 at the middle of the first end edge 612.

Alternatively, the second end edge 612 has only one second protrusion 616 or one third recess 617.

It can be readily envisioned that the number of first protrusions 614 and the number of second recesses 615 on the second end edge 612 can be freely combined without limitation in this disclosure. Alternatively, in some other embodiments of this disclosure, the second end edge 612 is a straight line, as shown in FIG 5. This helps maintain strength of the second end edge 612 of the second layer 400.

Correspondingly, the third end edge 613 can have various shapes.

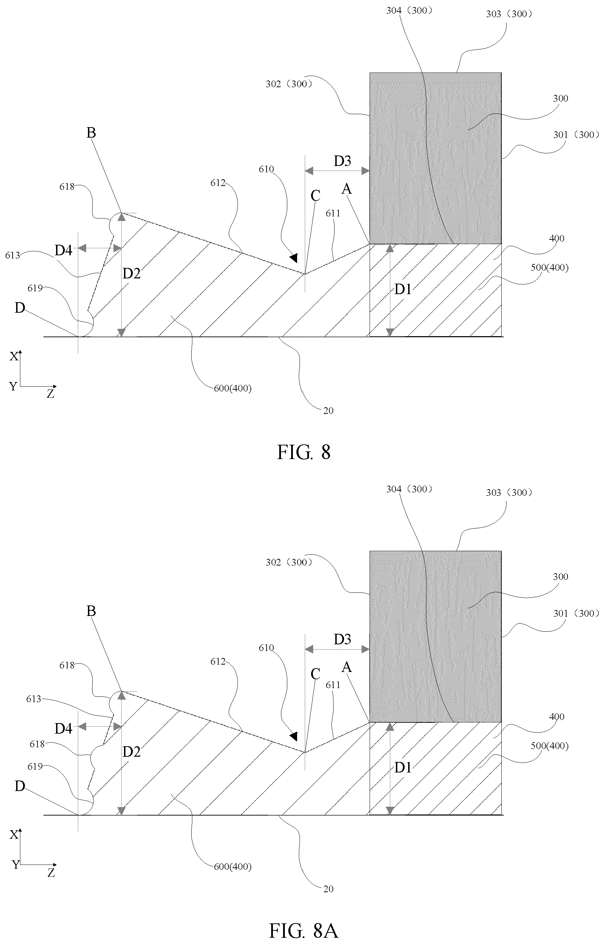

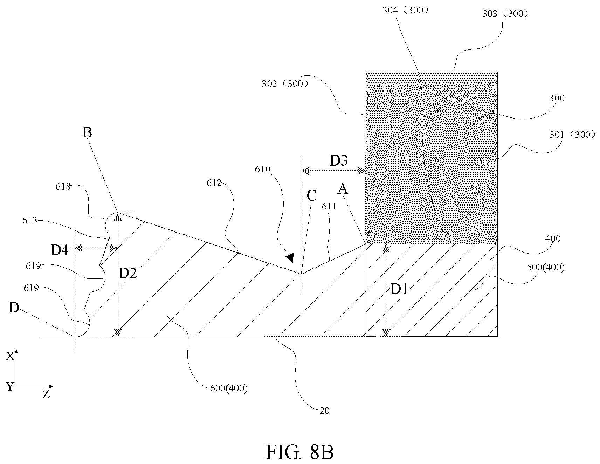

As shown in FIG 8, in some embodiments of this disclosure, in the first direction X, the third end edge 613 has a third protrusion 618 that protrudes in the direction away from the housing 20 and a fourth recess 619 that recesses toward the housing 20.

The provision of the third protrusion 618 increases the surface area of the second layer 400, facilitating heat dissipation of the second layer 400. The provision of the fourth recess 619 facilitates the bending of the second layer 400 at the third end edge 613, improving energy density.

Alternatively, as shown in FIG. 8A, the third end edge 613 has a third protrusion 618 and a fourth recess 619 respectively at two ends, and another third protrusion 618 at the middle of the third end edge 613.

Alternatively, as shown in FIG 8B, the third end edge 613 has a third protrusion 618 and a fourth recess 619 respectively at two ends, and another fourth recess 619 at the middle of the third end edge 613.

Alternatively, the third end edge 613 has only one third protrusion 618 or one fourth recess 619.

It can be readily envisioned that the number of third protrusions 618 and the number of fourth recesses 619 on the third end edge 613 can be freely combined without limitation in this disclosure.

Alternatively, the third end edge 613 is a straight line, as shown in FIG 5. This helps maintain strength of the third end edge 613 of the second layer 400.

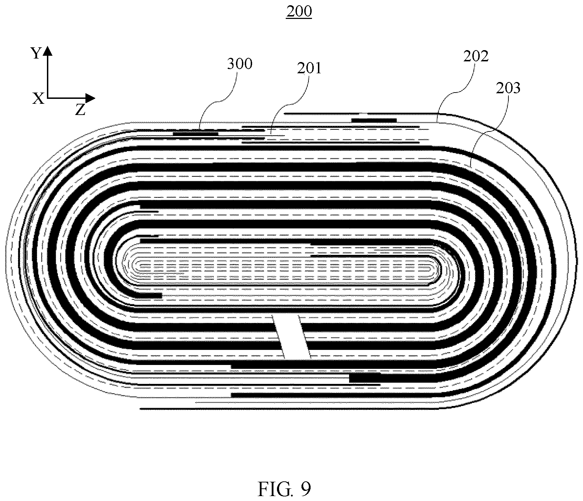

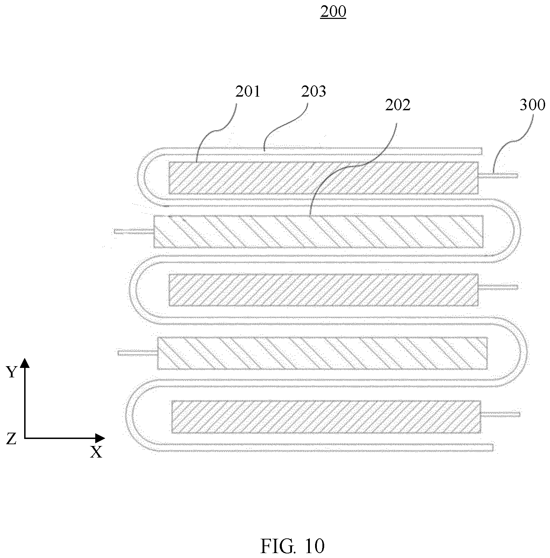

In some embodiments of this disclosure, the multilayer body 200 is of an axially wound structure or a stacked structure. FIG 9 and FIG 10 respectively illustrate a schematic diagram of a wound-type multilayer body 200 and that of a stacked-type multilayer body 200.

According to some embodiments of a second aspect of this disclosure, an electric apparatus is provided. The electric apparatus includes the battery 10 according to the first aspect, where the battery 10 is configured to supply electric energy to the electric apparatus. The electric apparatus may be but is not limited to a mobile phone, a tablet, a laptop computer, an electric toy, an electric tool, an electric bicycle, an electric car, a ship, or a spacecraft.

The electric apparatus provided in some embodiments of this disclosure utilizes the battery 10 according to the first aspect as a power source. The battery 10 has the first conductive portion 300 connected to the multilayer body 200 and the second layer 400 that encompasses a portion of the first conductive portion 300. The second layer 400 includes the first region 500 overlapped with the first conductive portion 300, and the second region 600 located on the side of the first region 500 in the second direction Z. The second region 600 has the first recess 610 on a side away from the housing 20. Because the second region 600 is provided with the first recess 610, when the first conductive portion 300 is bent, the first recess 610 disperses the bending stress at the root of the first conductive portion 300, thus reducing the bending stress at the root of the first conductive portion 300, leading to lower degree and probability of rebound of the first conductive portion 300. In addition, when the first conductive portion 300 is connected to the circuit board 110, this can improve the connection stability between the first conductive portion 300 and the circuit board 110, enhancing the reliability of the battery 10 and the electric apparatus.

Described above are merely some preferred embodiments of the present disclosure, which are not intended to limit the present disclosure. Any modifications, equivalent replacements, or improvements made without departing from the spirit and principle of this disclosure should fall within the protection scope of the present disclosure.

## Claims

1. A battery, **characterized in that** the battery comprises:
a multilayer body comprising a first conductive layer, a second conductive layer, and a first layer positioned between the first conductive layer and the second conductive layer, the first layer comprising an insulating material;
a first conductive portion electrically connected to the first conductive layer, and the first conductive portion extends in a first direction away from the multilayer body;
a second layer connected to the first conductive portion and the second layer extends in a second direction perpendicular to the first direction to a position apart from the first conductive portion; and
a housing encompassing the multilayer body, and the housing encompasses a portion of the first conductive portion and a portion of the second layer;
wherein viewed along a third direction perpendicular to both the first direction and the second direction, the second layer comprises a first region and a second region (600); the first region overlaps with the first conductive portion and the second region is apart from the first conductive portion; wherein in the first direction, the second region has a first recess recessed toward the housing.

2. The battery according to claim 1, wherein in the second direction, the second layer comprises:
a first endpoint located in the first region, and the first endpoint is apart from the housing in the first direction;
a second endpoint located in the second region, and the second endpoint is apart from the housing in the first direction and is farthest from the housing in the first direction; and
a third endpoint located in the second region, and the third endpoint is apart from the housing in the first direction and is closest to the housing in the first direction; wherein
the first endpoint is located at a boundary between the first region and the second region; and in the second direction, the third endpoint is located between the first endpoint and the second endpoint.

3. The battery according to claim 2, wherein in the first direction, a first distance from the housing to the first endpoint is shorter than a second distance from the housing to the second endpoint.

4. The battery according to claim 3, wherein the first distance is D1, the second distance is D2, and D2 > D1 > 1/3D2.

5. The battery according to claim 3, wherein the first distance ranges from 0.1 mm to 2.5 mm, and the second distance ranges from 0.2 mm to 3.0 mm.

6. The battery according to claim 3, wherein viewed along the third direction, the first recess comprises a first end edge connecting the first endpoint and the third endpoint in the second region and a second end edge connecting the second endpoint and the third endpoint, wherein the third direction is perpendicular to both the first direction and the second direction.

7. The battery according to claim 6, wherein in the first direction, the first end edge comprises a first protrusion protruding away from the housing.

8. The battery according to claim 6, wherein in the first direction, the first end edge comprises a second recess recessed toward the housing.

9. The battery according to claim 6, wherein the first end edge is a straight line.

10. The battery according to claim 6, wherein in the first direction, the second end edge comprises a second protrusion protruding away from the housing.

11. The battery according to claim 6, wherein in the first direction, the second end edge comprises a third recess recessed toward the housing.

12. The battery according to claim 6, wherein the second end edge is a straight line.

13. The battery according to claim 6, wherein the second layer comprises a fourth endpoint farthest from the first conductive portion in the second direction and in contact with the housing.

14. The battery according to claim 13, wherein in the second direction, a third distance from the first endpoint to the third endpoint is longer than a fourth distance from the second endpoint to the fourth endpoint.

15. The battery according to claim 14, wherein the first distance is D1, the second distance is D2, the third distance is D3, the fourth distance is D4, and D3 + D4 < D1 < D2.

16. The battery according to claim 14, wherein the third distance ranges from 0.1 mm to 2 mm, and the fourth distance ranges from 0.1 mm to 2 mm.

17. The battery according to claim 14, wherein in the second direction, the second endpoint is located between the fourth endpoint and the third endpoint.

18. The battery according to claim 13, wherein when viewed along the third direction, the battery comprises a third end edge connecting the second endpoint and the fourth endpoint.

19. The battery according to claim 18, wherein in the first direction, the third end edge has a third protrusion protruding away from the housing.

20. The battery according to claim 18, wherein in the first direction, the third end edge has a fourth recess recessed toward the housing.

21. The battery according to claim 18, wherein the third end edge is a straight line.

22. The battery according to any one of claims 1 to 21, wherein the multilayer body is of an axially wound structure or a stacked structure.

23. An electric apparatus comprising the battery according to any one of claims 1 to 21, and the battery is configured to provide electric energy to the electric apparatus.
